## Europäisches Patentamt
## European Patent Office
## Office européen des brevets

(11) Numéro de publication: **0 233 817**
**A1**

(12) # DEMANDE DE BREVET EUROPEEN

(21) Numéro de dépôt: 87400208.2

(22) Date de dépôt: 30.01.87

(51) Int. Cl.³: **B 66 C 1/62**
B 66 C 1/12, F 16 G 11/12

(30) Priorité: 31.01.86 FR 8601341
04.07.86 FR 8609793
16.09.86 FR 8612913

(43) Date de publication de la demande:
26.08.87 Bulletin 87/35

(84) Etats contractants désignés:
AT BE CH DE ES GB GR IT LI LU NL SE

(71) Demandeur: Lèbre, Charles Jean Pierre
35, rue de l'Orangerie
F-91700 Sainte Genevieve des Bois(FR)

(72) Inventeur: Lèbre, Charles Jean Pierre
35, rue de l'Orangerie
F-91700 Sainte Genevieve des Bois(FR)

(74) Mandataire: Hud, Robert
Cabinet COLLIGNON 6, rue de Madrid
F-75008 Paris(FR)

(54) Dispositif assurant la prise et le basculement d'une charge cylindrique ou parallélépipédique, en particulier d'un fût.

(57) Le dispositif comprend un châssis formé de deux tubes 1, 2 disposés en équerre. Le tube vertical 1 présente à sa partie supérieure une mâchoire fixe 3 s'engageant sous le rebord périphérique 5 du fût 4 et comporte en montage télescopique libre un prolongement 6 terminé par un crochet 7 s'engageant sous la base 8 du fût. Le tube horizontal 1 est fixe et réglable en hauteur. Sur le tube 1 est monté un coulisseau 11 portant une mâchoire mobile 12 qui engage la face intérieure de la paroi du fût. Une sangle 14 a une extrémité fixée au coulisseau 11, passe sur un galet 15, sur un axe 16 porté en bout du bras 1, sur un galet 17 d'entraînement, enveloppe le prolongement 6 du tube 2 et a son autre extrémité 26 fixée à ce tube. Lorsqu'une traction est appliquée à la sangle 14, le serrage effectué sur le fût par la mâchoire mobile 12 et par le crochet 7 permet la manipulation du fût.

EP 0 233 817 A1

Croydon Printing Company Ltd.

1

Dispositif assurant la prise et le basculement
d'une charge cylindrique ou parallélépipèdique,
en particulier d'un fût.


L'invention concerne un dispositif assurant la prise et le basculement d'une charge de forme quelconque, notamment de forme cylindrique ou parallélépipèdique, et en particulier d'un fût cylindrique.

On connaît de nombreux dispositifs assurant la saisie de fûts en position horizontale ou verticale afin de les déplacer en vue de les stocker, ou de les basculer pour les vider. Les dispositifs de préhension simples qui assurent la prise d'un fût en position verticale ou en positon horizontale sont limités au levage du fût dans la direction de la prise et ne permettent pas le changement de l'orientation du fût.

Pour assurer le changement de l'orientation du fût, il existe des appareils de type basculeur à mouvement rotatif qui sont généralement constitués par deux mâchoires enserrant le fût de chaque côté de son diamètre, ces mâchoires présentant des axes perpendiculaires qui s'engagent en rotation libre dans des paliers portés par les deux fourches d'un chariot élévateur ou par les bras d'un palonnier suspendu à un palan, la prise du fût s'effectuant au centre de celui-ci pour obtenir un centre de gravité relatif qui permet un basculement sans effort du fût.

Ces appareils, qui répondent parfaitement aux problèmes posés par le vidage de fûts ou la rotation continue de tels fûts pour en mélanger si nécessaire le contenu, ne permettent pas en raison de l'encombrement des axes de rotation des mâchoires de saisir un fût accolé contre un autre sur un support horizontal ou en position verticale sur une palette où les fûts sont généralement positionnés par quatre. Il est alors nécessaire de dégager les fûts à l'aide d'un moyen de préhension simple, pour ensuite effectuer la prise avec le basculeur.

La présente invention a pour objet de remédier à ces inconvénients et elle propose à cet effet un dispositif simple et d'une grande fiabilité qui permet de saisir en quelques secondes une charge, en particulier un fût, aussi bien en position verticale qu'horizontale, même placé entre deux autres charges accolées, et qui après élévation de la charge permet, sans effort et en toute sécurité, de la faire basculer sur elle-même pour la changer de position en lui appliquant un mouvement rotatif jusqu'à environ 120° pour en assurer, si désiré, une vidange totale.

Selon l'invention, le dispositif est constitué par un châssis en forme d'équerre avec deux bras à 90°, un premier de ces bras s'appliquant contre au moins une partie de la hauteur de la charge, coopérant à son extrémité libre avec un moyen d'accrochage de la base de la charge et présentant à son autre extrémité une mâchoire fixe pour engager radialement la paroi extérieure de la charge, et un second bras s'appliquant sur la section transversale de la charge et qui porte un élément coulissant comportant une mâchoire destinée à assurer un serrage de la charge contre ladite mâchoire fixe. Un organe souple de transmission constitué par exemple par une sangle, a une extrémité reliée à une partie dudit premier bras, coopérant avec ledit élément coulissant monté sur le second bras, et qui passe successivement sur un axe porté par l'extrémité libre du second bras et sur un organe de commande de la tension et du déplacement de l'organe souple de transmission.

Une traction verticale exercée sur l'organe souple de transmission par l'intermédiaire de l'organe de commande assure un serrage instantané et très efficace de la charge entre la mâchoire fixe et la mâchoire mobile portée par l'élément coulissant en permettant la prise et le soulèvement de la charge. Un déplacement de la sangle sur l'organe de commande assure l'inclinaison désirée de la charge pour permettre si désiré sa vidange totale ou partielle.

Selon une forme d'exécution de l'invention, l'élément coulissant est constitué par un coulisseau monté sur le second bras à proximité de l'angle du châssis. La mâchoire portée par ce coulisseau vient alors presser la face interne de la paroi de la charge contre la mâchoire fixe.

La puissance et la fiabilité de ce serrage , complété par le serrage effectué sur la verticale de la charge, permettent de se dispenser d'un serrage radial appliqué sur le diamètre supérieur de la charge, en permettant ainsi en particulier la prise et le basculement de fûts ouverts.

Avantageusement, ledit second bras du châssis est régable en longueur en étant réalisé en deux parties télescopiques qui, en fonctionnement, peuvent être immobilisées en positions relatives variables de façon à adapter la longueur du second bras à la largeur de la charge. Cela permet que la suspension de la charge par l'intermédiaire de la sangle s'effectue en deux points (l'axe porté par l'élément télescopique du second bras d'une part, le point de fixation du premier bras à la base de la charge d'autre part) qui sont pratiquement alignés avec la diagonale de la charge. Ainsi, le centre de gravité de la charge se trouve toujours équilibré et la force à appliquer à l'organe de commande pour produire l'inclinaison de la charge, en vue de sa vidange, est particulièrement réduite.

Selon une autre forme d'exécution du dispositif de l'invention s'appliquant au soulèvement et à l'inclinaison de charges fermées, l'élément coulissant du

4 0233817

second bras du châssis est constitué par une partie télescopique librement coulissante terminée par au moins une mâchoire conçue pour engager radialement la section d'extrémité de la charge en opposition de la mâchoire fixe, l'élément télescopique portant ledit axe sur lequel passe l'organe souple de transmission. La traction exercée sur la sangle par l'organe de commande provoque un serrage radial sur la section supérieure de la charge qui assure la prise en toute sécurité.

En vue du soulèvement de la charge, la coopération du moyen d'accrochage porté par le premier bras du châssis avec la base de la charge peut présenter certaines difficultés en devant incliner à la main la charge pour introduire sous sa base le moyen d'accrochage. Pour remédier à cette difficulté, l'invention prévoit d'associer au châssis de l'appareil un dispositif de fixation de la sangle permettant de procéder à un soulèvement limité de la charge pour la mise en place de l'organe d'accrochage, l'action de ce dispositif de fixation pouvant ensuite être très simplement annulée. Le dispositif de fixation comprend une clé à deux branches parallèles souples ou mobiles entre lesquelles est introduit l'organe souple de transmission, les deux branches étant réunies à une extrémité par une poignée de manoeuvre et étant séparées à leur autre extrémité en bénéficiant d'une certaine souplesse. La clé traverse des ouvertures identiques en regard d'une chape solidaire du châssis du dispositif et peut pivoter autour de son axe par actionnement de la poignée de manoeuvre pour enrouler une portion de l'organe souple de transmision sur la clé en serrant celui-ci entre les branches sous l'action du poids de la charge. Chaque ouverture de la chape présente sur sa périphérie une encoche dans laquelle vient se verrouiller l'une desdites branches de la clé en assurant l'immobilisation de l'organe souple.

Pour bien faire comprendre le dispositif selon l'invention, on en décrira ci-après, à titre d'exemples sans caractère limitatif, plusieurs formes d'exécution en référence au dessin schématique annexé dans lequel :

la figure 1 est une vue en élévation, avec coupe partielle, d'un appareil selon une première forme d'exécution de l'invention pour la prise et le basculement d'un fût cylindrique ;

la figure 2 est une vue partielle de face de l'appareil de la figure 1 ;

la figure 3 est une vue correspondant à la figure 1 de l'appareil en position basculée pour assurer la vidange du fût ;

la figure 4 est, à plus grande échelle, une vue en coupe verticale du dispositif d'immobilisation de sangle équipant l'appareil de la figure 1 ;

les figures 5 et 6 sont des vues en coupe verticale du dispositif de la figure 4 représenté respectivement en position de réception de la sangle et en position verrouillée d'immobilisation de celle-ci ;

la figure 7 est, à plus grande échelle, une vue en coupe verticale du dispositif de commande du basculement de l'appareil et du fût dont il est solidaire ;

la figure 8 est une coupe verticale prise selon la ligne VIII-VIII de la figure 7 ;

la figure 9 est une vue en élévation d'un appareil selon une seconde forme d'exécution de l'invention assurant la prise d'une charge parallélépipédique ; et

les figures 10 et 11 sont des vues, respectivement de face et de dessus, de l'appareil de la figure 9.

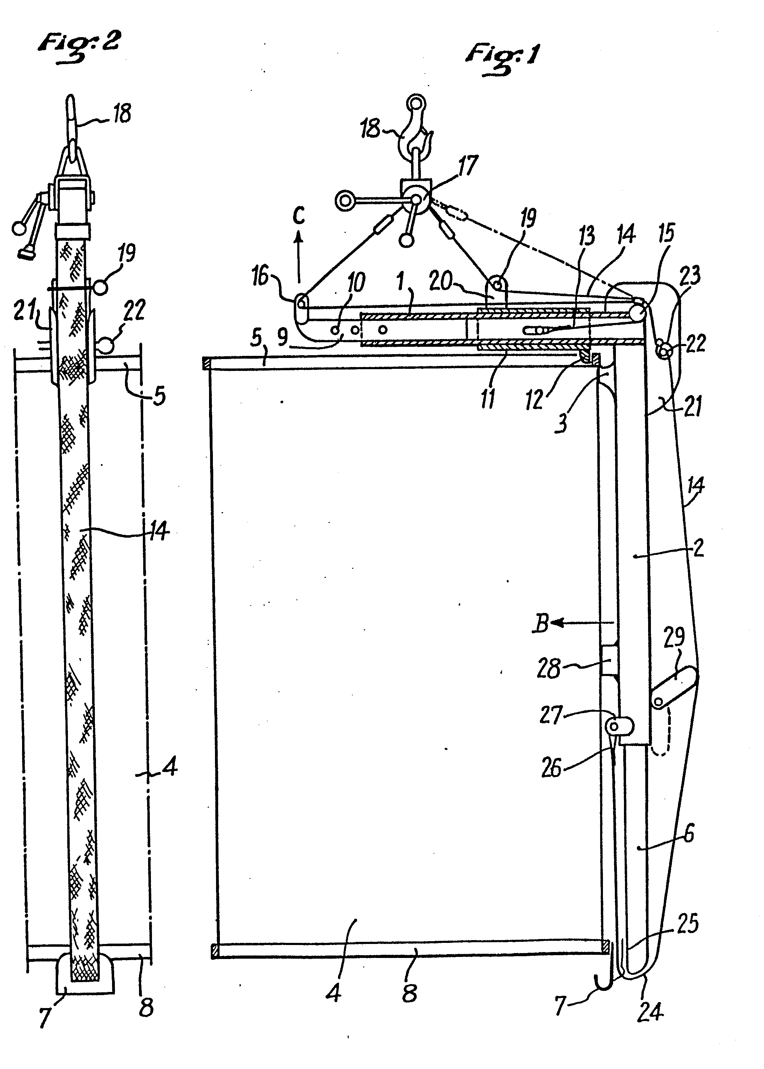

En référence aux figures 1 et 2 on a représenté le châssis de l'appareil constitué d'un tube horizontal 1 et d'un tube vertical 2 solidaires à 90° en forme d'équerre. Vers son extrémité supérieure le tube 2 porte, dirigée vers l'intérieur, une mâchoire fixe 3 qui vient s'appliquer contre la paroi latérale du fût 4 à saisir en s'engageant sous le rebord circonférentiel 5 de ce fût. Un élément inférieur télescopique 6 du tube vertical 2 porte à son extrémité libre un crochet 7 destiné à s'engager sous le rebord inférieur 8 du fût 4.

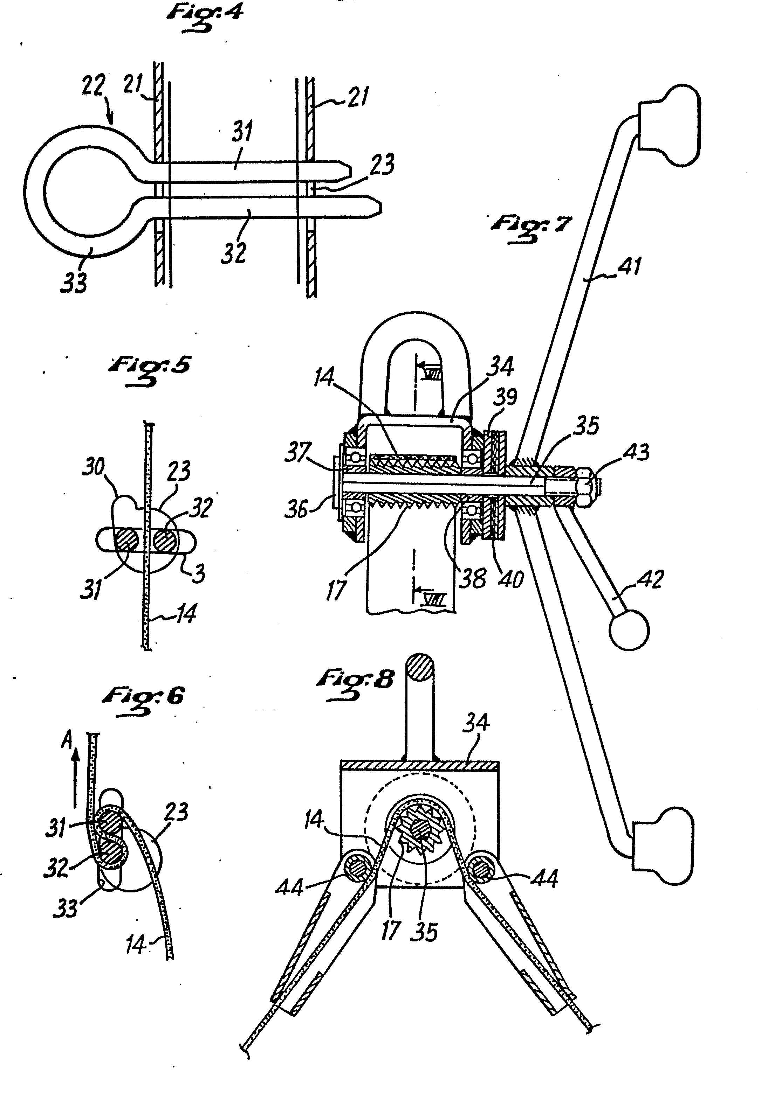

Le tube horizontal 1 reçoit intérieurement un élément télescopique 9 conçu pour être solidarisé à lui, dans une position réglable, par engagement d'un axe (non représenté) dans des ouvertures 10 en regard du tube 1 et de l'élément 9. Un coulisseau 11 est monté extérieurement sur le tube 1 et porte sur sa face inférieure une mâchoire 12 destinée à venir serrer la face interne du rebord 5 du fût. A ce coulisseau 11 est fixée l'extrémité 13 de la sangle 14 qui passe sur un galet 15 porté par le tube 1, sur un axe 16 porté par l'extrémité libre de l'élément 9, sur le galet d'entraînement 17 suspendu au crochet 18 d'un système de levage, sous un appui complémentaire constitué par un axe amovible 19 engagé dans des ouvertures d'une chape 20 portée par le coulisseau 11, puis passe entre des plaques de guidage 21 portées par le tube 2 et entre les branches d'une clé 22 logée dans des ouvertures 23 en regard des plaques 21; le système d'immobilisation à clé 22 sera décrit plus en détails par la suite, en référence aux figures 4 à 6. La sangle 14 décrit ensuite une boucle 24 pour passer sous l'élément inférieur télescopique 6, puis traverse un passage 25 du crochet 7 et a son extrémité 26 fixée par un axe à une chape 27 solidaire de l'extrémité inférieure du tube 2. Sur sa face intérieure, à sa partie inférieure, le tube 2 porte une butée 28 de même épaisseur que la mâchoire 3 alors que, sur sa face extérieure, il porte un taquet pivotant 29 conçu pour engager la sangle 14 et dont l'inclinaison est réglable pour faire varier le déport de la sangle par rapport à la paroi du fût.

Comme on le voit plus en détails aux figures 4 à 6, les ouvertures 23 en regard des plaques 21 sont à contour circulaire et se prolongent à la partie supérieure par une encoche 30. A travers ces ouvertures 23 est engagée transversalement la clé 22 présentant deux branches parallèles 31, 32 réunies entre elles, à une extrémité, par une boucle 33 formant poignée de manoeuvre ce qui permet beaucoup de souplesse aux branches 31, 32.

En vue de la manipulation du fût 4, la mise en place de l'appareil est particulièrement simple puisqu'il suffit de disposer le châssis en appui sur l'angle du fût avec la mâchoire 3 sous le rebord 5. La sangle 14 étant au repos on peut engager la clé 22 dans les ouvertures 23 en positionnant ses branches 31, 32 de chaque côté de la sangle comme le montre la figure 5. Une rotation de la clé 22 dans le sens anti-horaire amènera la branche 32 dans l'encoche 30 comme le montre la figure 6, position dans laquelle la sangle 14 enveloppe les deux branches de cette clé en présentant la forme d'un S et dans laquelle la branche 31 est engagée et bloquée à l'intérieur de l'encoche 30. On comprend qu'alors une traction appliquée sur la partie supérieure de la sangle 14, selon la flèche A de la figure 6, aura tendance à appliquer la branche 32 contre la branche 31 en assurant le serrage de la partie de sangle passant entre elles. De plus, cette force de traction aura pour effet de maintenir la branche 31 à l'intérieur de l'encoche 30 en renforçant le verrouillage. La sangle 14 étant ainsi immobilisée entre les branches de la clé 22, on procède à un léger soulèvement du crochet 18 de façon à appliquer sur la partie de la sangle 14 située entre le coulisseau 11 et la clé 22, une traction qui a pour effet d'assurer par la seule mâchoire intérieure 12 un serrage particulièrement efficace contre la face interne de la paroi verticale du fût. Une continuation de cette traction assure un pré-levage du fût avec un effet de couple imposé à l'appareil qui est schématisé par les flèches C et B de la figure 1.

Le fût 4 ainsi soulevé, on engage très facilement le crochet 24 sous son rebord inférieur 8. Il suffit alors de redéposer le fût au sol pour obtenir le relâchement de la sangle 14 et ensuite d'extraire latéralement la clé 22 des ouvertures 23 pour libérer instantanément et totalement la sangle 14 de cette fixation complémentaire.

La sangle 14 étant ainsi libérée, il ne reste plus qu'à soulever le fût 4 au moyen du crochet 18. L'élément télescopique 9 du bras 1 étant réglé approximativement à la longueur du diamètre du fût 4, la suspension du fût par la sangle 14 s'effectue pratiquement selon une diagonale de celui-ci de sorte que, la charge du fût se trouvant placée sur son centre de gravité relatif,
le changement de position du fût s'effectue facilement et
sans effort par rotation du galet 17 assurant le
déplacement de la sangle 14, comme on l'expliquera plus
loin.

On comprend que, durant les opérations de
soulèvement et d'inclinaison du fût, aucun serrage radial
n'est appliqué selon un diamètre supérieur de celui-ci ce
qui permet de manipuler des fûts ouverts aussi bien que
des fûts fermés.

En fonction des dimensions du fût à manipuler,
on règle l'inclinaison du taquet 29 qui engage la sangle
14 pour écarter celle-ci du diamètre du fût 4. On assure
ainsi une meilleure répartition du centre de gravité pour
permettre, quelles que soient les dimensions du fût,
d'avoir à appliquer au galet 17 une force de commande à
peu près constante pour assurer l'inclinaison du fût.

L'appui complémentaire pour la sangle 14,
constitué par l'axe amovible 19 porté par la chape 20
permet, quand cela est désiré, d'accroître la force de
serrage appliquée à la mâchoire 12.

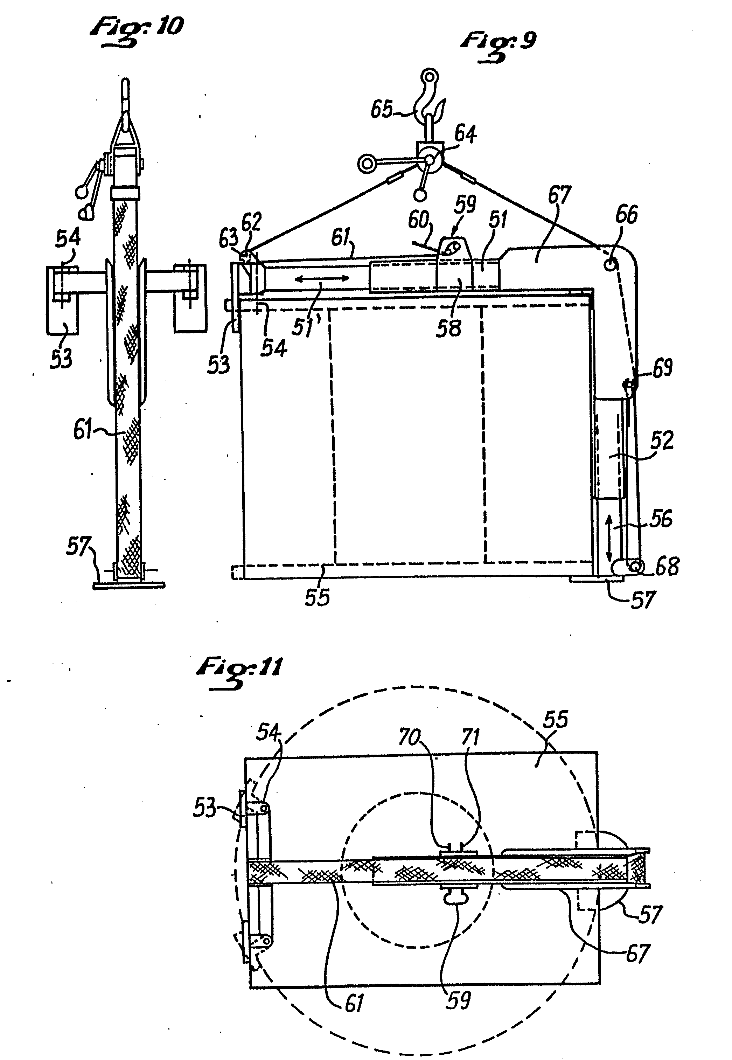

Aux figures 7 et 8, on a représenté plus en
détails le système d'entraînement de la sangle 14. Ce
système comprend une chape 34, destinée à être suspendue
au crochet 18, dont les flasques présentent des ouvertures
en regard à travers lesquelles est monté en rotation libre
un axe 35 à profil à six pans. Sur l'axe 35 est monté, à
l'intérieur de la chape 34 et solidaire en rotation de cet
axe, le galet ou rouleau 17 à revêtement en pointe de
diamant. D'un côté, la tête 36 de l'axe 35 s'appuie sur
une entretoise 37 qui traverse le flasque de la chape,
alors que de l'autre côté le corps de l'axe 35 traverse
une entretoise 38, une rondelle fixe 39 solidaire de la
chape, une rondelle 40 en cuir montée libre en translation
et la manivelle 41 également libre en translation.
L'extrémité libre de l'axe 35 est filetée et reçoit par
vissage une manette de frein 42 maintenue par un écrou
frein 43. Pour entraîner en rotation le galet 17, afin
d'assurer la circulation de la sangle 14, il suffit d'actionner la manivelle 41 dans le sens convenable, celle-ci entraînant en rotation l'axe 35 et le galet 17 qui lui est solidaire. L'inclinaison désirée du fût 4 étant ainsi obtenue, si l'on désire immobiliser l'appareil dans cette position il suffira alors d'actionner la manette 42 dans le sens du vissage de façon que celle-ci repousse vers la gauche de la figure 7 la manivelle 41 et la rondelle 40. La rondelle 40 se trouve ainsi pressée entre la rondelle fixe 39 et la poignée 41 solidaire en rotation de l'axe 35, ce qui assure l'immobilisation de celui-ci.

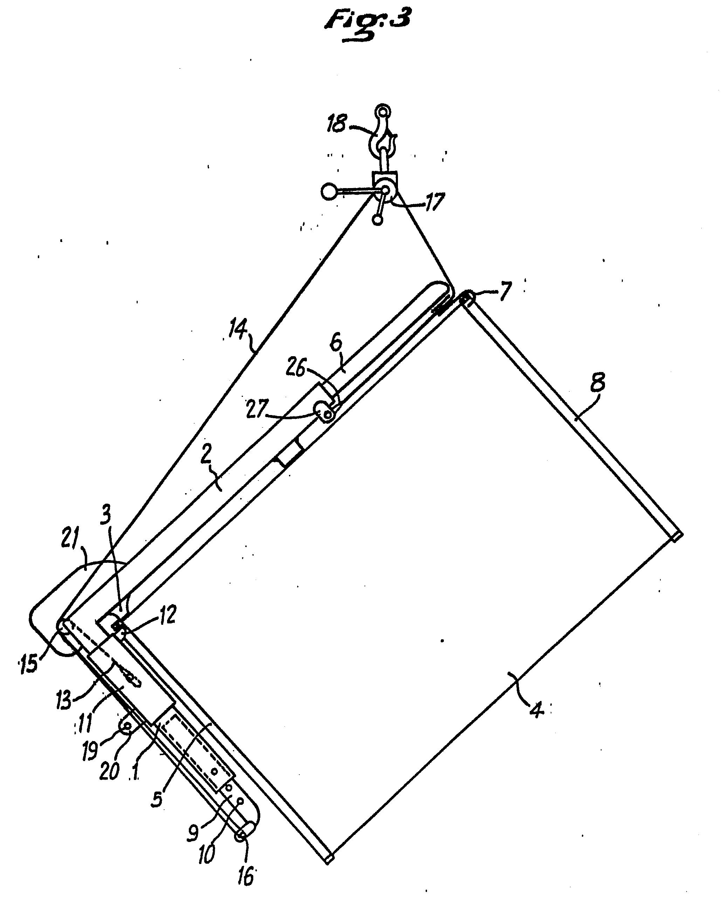

Comme on l'a indiqué, le galet 17 est prévu avec un revêtement à pointes de diamant, ce qui assure un excellent entraînement de la sangle (à la façon d'un engrenage) sans aucune détérioration de celle-ci. Ainsi qu'on le voit à la figure 8 un système de guidage, avec des galets 44 disposés de chaque côté du galet d'entraînement 17 et montés fous sur la chape 34, assure une bonne application de la sangle 14 sur le galet 17. La figure 3 montre le fût en position d'inclinaison maximum pour sa vidange.

En référence aux figures 9 à 11, on a représenté une seconde forme d'exécution du dispositif selon l'invention, pour la prise et le basculement de fûts fermés. Le châssis du dispositif est constitué par deux tubes 51, 52 assemblés à 90°. Dans le tube horizontal 51 est monté télescopiquement un tube 51' comportant à son extrémité libre deux mâchoires 53 articulées chacune autour d'un axe vertical 54. Chaque mâchoire 53 comprend une chape verticale venant se serrer contre la face frontale de la charge 55, par exemple une caisse. A l'intérieur du tube vertical 52 est monté coulissant un pied télescopique 56 se terminant par une mâchoire horizontale 57 destinée à être introduite sous la face inférieure de la charge 55.

Sur le tube 51 est fixée une chape 58 comportant un dispositif 59 qui assure la fixation de l'extrémité 60 d'une sangle 61. Cette sangle 61 passe autour d'un axe 62 porté par une chape 63 solidaire du tube 51', puis sur le galet d'entraînement 64 suspendu au crochet 65, sur un axe 66 porté par des plaques de guidage parallèles 67, sur un axe 68 solidaire de la partie inférieure du pied télescopique 56, puis forme une boucle et vient se fixer sur un axe 69 solidaire de la partie inférieure des plaques 67.

Le dispositif de fixation 59 comprend une clé constituée de deux branches parallèles 70, 71 et identique à la clé 22 précédemment décrite en référence aux figures 4 à 6. Cette clé peut tourner dans des ouvertures identiques portées par deux plaques parallèles de la chape 59, chaque ouverture présentant une périphérie circulaire avec une encoche. La fixation de l'extrémité 60 de la sangle s'effectue, de la même façon que décrit en référence aux figures 4 à 6, en introduisant cette extrémité de sangle entre les branches 70, 71, puis en faisant tourner la clé dans le sens anti-horaire (pour serrage de la sangle entre les deux branches) et en bloquant par engagement d'une branche dans l'encoche. Si l'on dispose de trop de longueur de sangle, on peut avantageusement régler la longueur de celle-ci en faisant faire à la clé, avant de la verrouiller, autant de rotations sur elle-même qu'il est nécessaire pour enrouler la longueur de sangle superflue. La longueur utile de sangle varie avec le volume des charges à manutentionner du fait du montage télescopique des mâchoires.

Une fois l'extrémité de sangle ainsi immobilisée, un soulèvement du crochet 65 communique à la sangle 61 la traction assurant une excellente prise de la charge 55, selon une diagonale de celle-ci, par les mâchoires 53 et 57. L'entraînement en rotation du galet 64 permettra le basculement désiré de la charge.

Aux figures 9 et 11, on a représenté en trait plein une charge 55 de forme parallélépipédique saisie par le dispositif. Toutefois, à titre indicatif, on a schématisé en trait pointillé sur ces mêmes figures la prise d'une charge à section circulaire telle qu'une bobine de fil électrique.

On comprendra que la présente description a été donnée à simple titre d'exemple, sans caractère limitatif, et que des adjonctions ou des modifications constructives, pourraient y être apportées sans sortir du cadre de l'invention. En particulier, on pourrait utiliser sur un même appareil, coopérant avec le bras horizontal du châssis, à la fois une mâchoire mobile serrant la face interne de la charge et une mâchoire mobile assurant le serrage radial de celle-ci.

1

REVENDICATIONS.

1. Dispositif assurant la prise et le basculement d'une charge, en particulier de forme parallélépipèdique ou de forme cylindrique telle qu'un fût, caractérisé en ce qu'il comporte un châssis en forme d'équerre avec deux bras à 90°, un premier (2, 51) de ces bras s'appliquant contre au moins une partie de la hauteur de la charge (4, 53), coopérant à son extrémité libre avec un moyen d'accrochage (7, 80) de la base de la charge et présentant à son autre extrémité une mâchoire fixe (3, 54) pour engager radialement la paroi extérieure de la charge, et un second bras (1, 52) s'appliquant sur la paroi transversale de la charge et qui porte un élément coulissant (11, 65) comportant une mâchoire (12, 64) destinée à assurer un serrage de la charge contre ladite mâchoire fixe (3, 54) et un organe souple de transmission (14, 63) ayant une extrémité reliée à une partie dudit premier bras (2, 51) coopérant avec ledit élément coulissant (11, 65) monté sur le second bras (1, 52), et passant successivement sur un axe (16, 70) porté par l'extrémité libre du second bras et sur un organe (17, 71) de commande de la tension et du déplacement de l'organe souple (14, 63).

2. Dispositif selon la revendication 1, caractérisé en ce que ledit élément coulissant est constitué par un coulisseau (11) monté sur le second bras (1) au voisinage de l'angle du châssis et portant une mâchoire (12) destinée à presser la paroi verticale de la charge (4) contre la mâchoire fixe (3).

3. Dispositif selon la revendication 2, caractérisé en ce que ledit second bras (1) est réglable en longueur en étant réalisé en deux parties télescopiques qui, en fonctionnement, peuvent être immobilisées en positions relatives variables de façon à adapter la longueur du second bras (1) à la largeur de la charge (4) pour réaliser le soulèvement de celle-ci selon sa diagonale.

4. Dispositif selon l'une quelconque des revendications 1 à 3, caractérisé en ce que le premier bras comprend une partie fixe (2) et une partie mobile (6) coulissant librement à l'intérieur de la partie fixe, ladite partie mobile (6) présentant à son extrémité libre un moyen d'engagement (7) de la base (8) de la charge et l'organe souple de transmission (14) enveloppant ladite partie mobile (6) pour se fixer à l'extrémité de la partie fixe (2) du premier bras.

5. Dispositif selon la revendication 1, caractérisé en ce que l'élément coulissant du second bras (52) est constitué par une extrémité télescopique (56) de ce bras terminée par au moins une mâchoire (61) conçue pour engager radialement la section d'extrémité de la charge (53) en opposition de la mâchoire fixe (54), l'élément télescopique (56) portant ledit axe (70) sur lequel passe l'organe souple de transmission (63).

6. Dispositif selon la revendication 5, caractérisé en ce que l'extrémité libre de l'élément télescopique (56) coulissant dans le second bras (52) porte au moins une mâchoire (53) oscillant autour d'un axe vertical (54) en permettant l'adaptation du dispositif à tout diamètre de charge cylindrique ainsi qu'à un bord de charge rectiligne.

7. Dispositif selon l'une quelconque des revendications 1 à 6, caractérisé en ce que le premier bras (2) porte un dispositif de fixation de l'organe souple de transmission permettant un soulèvement limité de la charge sans que le moyen d'accrochage (7) coopérant avec le premier bras n'engage la base de la charge (4), ledit dispositif de fixation comprenant une clé (22) à deux branches parallèles (31, 32) souples ou mobiles entre lesquelles est introduit l'organe souple de transmission (14), les deux branches (31, 32) étant réunies à une extrémité par une poignée de manoeuvre (33) et étant séparées à leur autre extrémité en bénéficiant d'une certaine souplesse, ladite clé (22) traversant des ouvertures identiques (23) en regard d'une chape et pouvant pivoter autour de son axe par actionnement de la poignée de manoeuvre (33) pour enrouler une portion de l'organe souple de transmission (14) sur la clé en serrant celui-ci entre les branches (31, 32) sous l'action du poids de la charge (4), chaque ouverture (23) présentant sur sa périphérie une encoche (30) dans laquelle vient se verrouiller l'une desdites branches (31, 32).

8. Dispositif selon l'une quelconque des revendications précédentes, caractérisé en ce que l'organe de commande de la tension et de l'entraînement de l'organe souple de transmission (14) est constitué par un galet (17) monté pour tourner à la partie inférieure d'une chape (34) suspendue à un organe de levage, l'axe du galet (17) étant solidaire d'une manivelle (41) d'actionnement alors que des organes de guidage (44) portés par la chape (34) assurent l'application de l'organe souple de transmission (14) sur le galet d'entraînement (17), ledit galet d'entraînement comportant un revêtement en pointes de diamant.

9. Dispositif selon l'une quelconque des revendications précédentes, caractérisé en ce que l'organe souple de transmission (14, 63) est constitué par une sangle.

10. Appareil selon la revendication 8, caractérisé en ce que le galet d'entraînement (17) est fixé en rotation sur un axe (35) à l'intérieur d'une chape (34), alors que sur cet axe (35) sont également fixés en rotation une rondelle en matériau de friction (40) et le levier de manoeuvre (41) en contact avec un levier frein (42) vissé sur l'extrémité filetée dudit axe (35), le vissage du levier frein (42) appliquant la rondelle (40) contre la chape fixe (34) en immobilisant l'axe (35) et le galet d'entraînement (17).

Fig.2

Fig.1

0233817

1/4

**Fig.3**

0233817

Fig:4

22  21

31

23

33  32  21

Fig:5

30  23  32

31  3

14

Fig:7

14  34

39

37

36  35  43

17  38  40

Fig:6

A

31

23

32

33

14

Fig:8

34

14

44  17  35  44

Fig. 10

Fig. 9

Fig. 11

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 4) |
|---|---|---|---|
| A | US-A-3 434 612 (SCHMIDT) <br> * En entier * <br> --- | 1 | B 66 C 1/62 <br> B 66 C 1/12 <br> F 16 G 11/12 |
| A | US-A-2 399 360 (LACEY) <br> --- | | |
| P,A | FR-A-2 576 007 (LEBRE) <br> --- | | |
| A | US-A-3 785 692 (ERICSON) <br> --- | | |
| A | US-A-2 327 005 (BABCOCK) <br> --- | | |
| A | DE-C- 964 900 (RÖHRL) <br> --- | | |
| A | US-A-2 871 052 (NEHER) <br> --- | | |
| A | US-A-3 103 282 (YORK) <br> --- | | |
| A | FR-A-2 532 637 (CHAPALAIN) <br> --- | | |
| A | FR-A- 857 542 (GRONEAU) <br> --- -/- | | |

### DOMAINES TECHNIQUES RECHERCHES (Int. Cl.4)

B 66 C
F 16 G

Le présent rapport de recherche a été établi pour toutes les revendications

| Lieu de la recherche <br> LA HAYE | Date d'achèvement de la recherche <br> 06-04-1987 | Examinateur <br> VAN DEN BERGHE E.J.J |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82

# RAPPORT DE RECHERCHE EUROPEENNE

Office européen
des brevets

## DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int. Cl.4) |
|---|---|---|---|
| A | DE-B-1 168 618  (BÄCKER)<br><br>---<br><br>----- | | |

DOMAINES TECHNIQUES
RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 06-04-1987 | VAN DEN BERGHE E.J.J |

CATEGORIE DES DOCUMENTS CITES

X : particulièrement pertinent à lui seul
Y : particulièrement pertinent en combinaison avec un
  autre document de la même catégorie
A : arrière-plan technologique
O : divulgation non-écrite
P : document intercalaire

T : théorie ou principe à la base de l'invention
E : document de brevet antérieur, mais publié à la
  date de dépôt ou après cette date
D : cité dans la demande
L : cité pour d'autres raisons

& : membre de la même famille, document correspondant

OEB Form 1503 03 82